# EUROPÄISCHE PATENTSCHRIFT

(11) **EP 3 195 716 B1**
(45) Veröffentlichungstag und Bekanntmachung des Hinweises auf die Patenterteilung: **06.03.2019**
(21) Anmeldenummer: 17401004.1
(22) Anmeldetag: 23.01.2017
(51) Int. Cl.: A01C 17/00, A01M 7/00, A01C 21/00

(54) **ELEKTRONISCHE EINHEIT FÜR EINE LANDWIRTSCHAFTLICHE VERTEILMASCHINE**
ELECTRONIC UNIT FOR AN AGRICULTURAL DISTRIBUTION MACHINE
UNITÉ ÉLECTRONIQUE POUR UN ÉPANDEUR AGRICOLE

(30) Priorität: 25.01.2016 DE 102016101188
(43) Veröffentlichungstag der Anmeldung: 26.07.2017
(73) Patentinhaber: Amazonen-Werke H. Dreyer GmbH & Co. KG, 49205 Hasbergen (DE)
(72) Erfinder: Rahe, Florian, 49504 Lotte (DE)

(56) Entgegenhaltungen:
- EP-A1- 2 770 812
- DE-A1-102005 002 437
- US-A1- 2012 016 517
- US-A1- 2015 107 503

## Beschreibung

Die Erfindung betrifft eine Elektronische Einheit für eine landwirtschaftliche Verteilmaschine gemäß des Oberbegriffes des Patentanspruches 1.

Eine derartige landwirtschaftliche Maschine ist in EP 2 770 812 A1 beschrieben. Dieses Dokument beschäftigt sich mit der Verarbeitung von Informationen welche von einem Materialetikett oder einem Tag elektronisch ausgelesen werden. Diese Informationen werden verwendet, um Einstellparameter der landwirtschaftlichen Maschine zu generieren. Beispielsweise können mittels der abgerufenen Informationen Einstellungen am Flüssigkeitskreislauf einer Feldspritze vorgenommen werden. Diese Information kann beispielsweise von einem Etikett, beispielsweise einem QR-Code, abgescannt werden oder alternativ von einem elektronischen Tag mittels NFC- oder BLE-Technologie drahtlos abgerufen werden. Insbesondere finden derartige Etiketten zur Kennzeichnung und Übermittlung von Einstellparametern beim Einsatz von Verteilmaschinen Verwendung. So können beispielsweise durch das Anbringen eines derartigen Etiketts an einem Kanister für Pflanzenschutzmittel oder einem Behältnis für Düngemittel entsprechende Einstellempfehlungen übermittelt werden. Eine Verwendung entsprechender Etikette und Tags für die Einstellung landwirtschaftliche Maschinen ist mithin bekannt.

Sowohl die US 2012/016517 A1 als auch die DE 10 2005 002 437 A1 weisen einen ähnlichen Offenbarungsgehalt auf. Die US 2015/0107503 A1 die Einstellungen von Maschinenparametern über eine Konsole, die als ein in der Traktorenkabine angeordnetes Terminal oder als mobiles Endgerät ausgeführt sein kann.

Darüber hinaus sind jedoch weitere Informationen zur Einstellung der jeweiligen Einstellparameter für Verteilmaschinen notwendig. Diese werden beispielsweise für gängige Düngemittel typischerweise in Streutabellen für die jeweilige Verteilmaschine in gedruckter Form oder elektronisch vorgegeben. Hierbei hängen die entsprechenden Einstellparameter einerseits entscheidend von der Art des verwendeten Düngemittels und andererseits von der jeweiligen Verteilmaschine ab. Für Düngemittel mit unbekannten oder neuartigen Eigenschaften müssen die jeweiligen Einstellparameter für die entsprechende Verteilmaschine gesondert übertragen oder mittels eines Software-Updates eingespielt werden.

Aufgabe der vorliegenden Erfindung ist es die Erstellung von Einstellparameter für eine landwirtschaftliche Verteilmaschine zu vereinfachen.

Diese Aufgabe wird in erfindungsgemäßer Weise durch den Patentanspruch 1 gelöst. Mittels der elektronischen Einheit sind Rechenoperationen zur Bestimmung von gutspezifischen Einstellparametern der landwirtschaftlichen Verteilmaschine durchführbar und die hierfür notwendigen Rechenvorschriften auf der elektronischen Einheit gespeichert, wobei das Ergebnis der Rechenoperation drahtlos oder drahtgebunden auslesbar und/oder auf einem Bildschirm ablesbar ist. Hierdurch wird auf einfache Art und Weise eine Berechnung von Einstellungsempfehlungen für das jeweilige Gut ermöglicht. Die elektronische Einheit kann hierbei vorzugsweise ein Bluetooth-Low-Energy-Tag (BLE-Tag) oder ein RFID-Tag sein, welches über einen eigenen Datenspeicher, eine Recheneinheit und eine autonome Energieversorgung, beispielsweise mittels Batterie, verfügt. Im Gegensatz zum Stand der Technik werden also nicht nur Informationen von einem Etikett oder Tag abgerufen oder auf diesem gespeichert, sondern es werden gespeicherte Informationen zur weitergehenden Berechnung von Einstellempfehlungen oder Einstellparameter verwendet. Die Berechnung der Einstellempfehlungen erfolgt hierbei direkt in dem Tag. Das Abrufen der Daten kann einerseits elektronisch erfolgen. Beispielsweise können mittels BLE die entsprechenden Einstellparameter auf ein Smartphone, einen Jobrechner oder ein Terminal zur weiteren Verwendung übertragen werden. Alternativ kann das Tag über ein Display verfügen und die ermittelten Einstellparameter können auf diesem zur Anzeige gebracht werden. Die Einstellparameter können anschließend beispielsweise mittels manueller Eingabe an einem Terminal weiterverwendet werden.

In einer vorteilhaften Weiterbildung ist die elektronische Einheit beim Erwerb des landwirtschaftlichen Gutes diesem beigefügt. Auf diese Weise können die Berechnungsvorschriften für das jeweilige landwirtschaftliche Gut diesem mittels eines entsprechenden Tags beigefügt werden. Die entsprechenden Einstellempfehlungen werden also dem Benutzer beim Erwerb des Guts mittels dieses Tags mit übergeben.

Erfindungsgemäß werden Parameter zur Durchführung der Rechenoperationen an diese drahtlos oder drahtgebunden übertragen und/oder in diese eingegeben. Somit können Parameter welche die verwendete landwirtschaftliche Verteilmaschine charakterisieren an den Tag übertragen werden, so dass mittels der auf dem Tag hinterlegten Rechenoperation für die verwendete landwirtschaftliche Maschine die zu verwendenden Einstellparameter durch diesen generiert werden können.

Beispiele für zu ermittelnde Einstellparameter sind die Schieberstellung eines Düngersteuer, die Einleitposition des Dünger auf die Streuscheibe eines Düngersteuer, die Drehzahl der Streuscheiben eines Düngersteuer, Einstellungen einer Grenzstreuvorrichtung eines Düngersteuer, Einstellungen für Pumpen und Ventile und Düsen einer Pflanzenschutzspritze, Wahl und Einstellung eines Dosierorgans einer Sämaschine und Ähnliches.

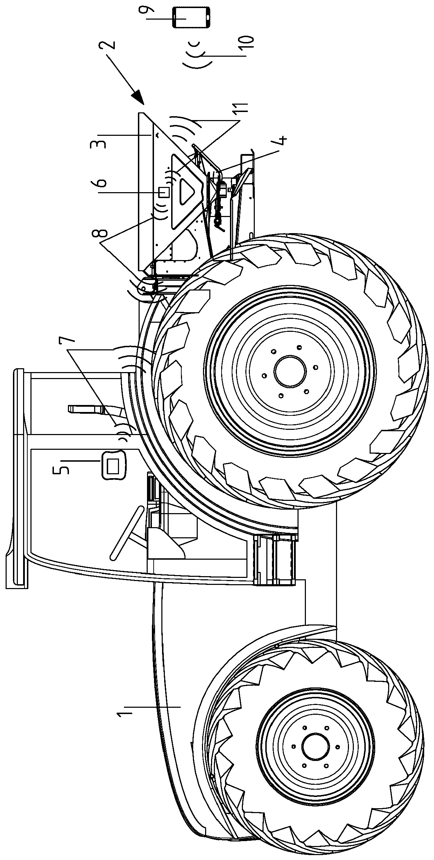

Der Tag kann darüber hinaus ausgebildet sein weitere Berechnungen durchzuführen oder Informationen zur Verfügung zu stellen. Beispielsweise können die bearbeitete Fläche und Restmengen ermittelt sowie berechnete Einstellparameter zur weiteren Verwendung gespeichert werden. Hierfür kann es sinnvoll sein das Tag mit weiteren Informationen, beispielsweise GPS-Koordinaten, zu versorgen Weitere Einzelheiten der Erfindung sind der Beispielsbeschreibung zu entnehmen. Die Zeichnung zeigt
eine beispielhafte landwirtschaftliche Verteilmaschine, ausgebildet als Schleuderstreuer, mit einer erfindungsgemäßen elektronischen Einheit angehängt an einen Schlepper.

Eine beispielhafte landwirtschaftliche Verteilmaschine, als Schleuderstreuer 2, angehängt an einen Schlepper 1 ist in der Figur gezeigt. Der Schleudersteuer verfügt über einen Vorratstank 3 zur Aufbewahrung des auszubringen Guts und zur Verteilung über Schleuderscheiben 4. In der Kabine des Schleppers 1 befindet sich ein Terminal 5 zur Steuerung und Überwachung der Funktionen und des Betriebs des Schleuderstreuers 2. Das Terminal 5 kann über entsprechende Anzeige- und Bedienelemente verfügen.

Am Schleudersteuer 2 ist ein Tag 6 angebracht. Hierbei kann es sich beispielsweise um ein BLE- oder RFID-Tag handeln. Dieses Tag 6 ist dem auszubringen Gut beigefügt und kann bei der Feldarbeit beispielsweise am Schleuderstreuer 2 befestigt oder in der Schlepperkabine mitgeführt werden. Das Tag verfügt zumindest über einen Datenspeicher, eine Recheneinheit und eine batteriegespeist Energieversorgung sowie über eine Vorrichtung zur Anzeige oder Übertragung von Daten, Informationen oder Parametern. In dem Speicher des Tags sind Rechenoperationen zur Ermittlung von Einstellparametern zur Verteilung des mit dem Tag übergebenen oder zu diesem gehörigen Guts hinterlegt.

Um die für die jeweils verwendete Verteilmaschine optimalen Betriebsparameter zu ermitteln, ist das Tag 6 zudem mit einer Datenübertragungseinrichtung ausgestattet. Diese ermöglicht es mittels drahtloser Übertragung Signale 7 von dem Terminal 5 zur Charakterisierung der angebauten Verteilmaschine 2 an das Tag 6 zu übermitteln. Alternativ können auch Daten mit einem Jobrechner der Verteilmaschine selbst ausgetauscht werden. Zudem ist es auch denkbar, dass die Übertragung nicht über eine drahtlose sondern über eine leitungsgebundene Verbindung abgewickelt wird. Die Signale 7 zur Charakterisierung der Verteilmaschine können beispielsweise den Typ der Verteilmaschine, die Arbeitsbreite, die Größe des Vorratstanks, den Typ der angebauten Streuscheiben und Ähnliches übermitteln. Aus diesen Daten ermittelt das Tag 6 anschließend mittels der in dem Speicher hinterlegten Rechenoperationen und unter Verwendung des Typs des auszubringenden Guts die entsprechenden Einstellparameter der Verteilmaschine 2. Diese werden dann an das Terminal 5 zurück übertragen und entweder zur Anzeige gebracht oder direkt zur Einstellung der Verteilmaschine übernommen. Alternativ können diese Einstellparameter auch an einen Jobrechner der Verteilmaschine 2 oder des Schleppers 1 übertragen werden.

Weitere Informationen können zudem von dem Tag übermittelt oder durch diesen ermittelt werden. Beispielsweise kann das Tag unter Berücksichtigung eines GPS-Signals die bearbeitete Fläche und die im Tank befindliche Restmenge bestimmen und an das Terminal laufend übertragen. Zusätzlich können weitere Informationen auf dem Tag gespeichert sein, wie beispielsweise Umweltauflagen, welche das auszubringen Gut betreffen. Hierbei kann es sich beispielsweise um Abstandsauflagen handeln, welche bei der Arbeit in der Nähe der Feldgrenze den einzuhaltenden Abstand bei der Verteilung definieren. Entsprechende Einstellparameter oder -empfehlungen für Grenzstreuvorrichtungen können ebenfalls durch das Tag ermittelt oder vorgeschlagen werden.

Alternativ oder zusätzlich kann das Tag mit anderen Anzeige- und Steuervorrichtungen wie beispielsweise einem Mobiltelefon 9 kommunizieren. Auch hierbei können Daten 10,11 von dem Mobiltelefon 9 mittels drahtloser Verbindung zu dem Tag 6 übertragen oder von diesem empfangen werden. Die ausgetauschten Daten können dann beispielsweise durch Ablesen entsprechender Einstellempfehlungen auf dem Display des Mobiltelefons 9 und Eingabe in ein Terminal weiterverarbeitet werden.

Auch ist es denkbar laufend eine Verbindung zu einem Terminal oder einer anderen Vorrichtung aufrechtzuerhalten, um die Einstellparameter zu aktualisieren und gegebenenfalls anzupassen. Beispielsweise kann eine Datenverbindung zwischen dem Tag und einer Messvorrichtung zu Bestimmung der Stickstoffversorgung der Pflanzen bei einem Düngevorgang etabliert und die Einstellparameter des Schleuderstreuers laufend für den derzeit ermittelten Stickstoffwert durch das Tag berechnet und/oder an das Terminal oder den Jobrechner des Schleuderstreuers übermittelt werden. Ähnliches ist bei einer Pflanzenschutzspritze denkbar, für die Sensoren zur Detektion und lokalen Behandlung von Pflanzen bekannt sind.

Ebenfalls ist es denkbar Daten auf dem Tag zur späteren Verwendung zu speichern oder zu überschreiben. Hierbei kann es sich beispielsweise um Restmengen des auszubringen Guts, Orte, Zeiten oder bearbeitete Flächen handeln. Auch angepasste Einstellempfehlungen können auf dem Tag zur späteren Verwendung hinterlegt werden. Für das Überschreiben oder Speichern von Daten kann hierbei eine Sicherheitsabfrage, beispielsweise die Übermittlung einer entsprechenden Signatur oder die Eingabe eines Passworts, vorgesehen sein.

Zudem ist eine Verwendung des Tags auch bei anderen Verteilmaschinen wie Pflanzenschutzspritzen und Sämaschinen denkbar. Hierbei kann beispielsweise die Ausbringrate, Verdünnung und Einstellparameter für Düsen Pumpen und Ventile für die Verwendung von Pflanzenschutzmitteln unter Berücksichtigung des übermittelten Typs der Pflanzenschutzspritze mittels in dem Tag gespeicherter Rechenvorschriften berechnet werden. Bei der Verteilung von Saatgut kann unter Berücksichtigung der verwendeten Sämaschine die Ausbringrate bestimmt und entsprechende Einstellparameter der verwendeten Sämaschine berechnet werden.

## Patentansprüche

1. Elektronische Einheit (6), ausgeführt als Bluetooth-Low-Energy-Tag oder RFID-Tag, mit einem Datenspeicher und einer Recheneinheit und einer batteriegespeisten Energieversorgung zur Mitführung bei einer landwirtschaftlichen Verteilmaschine (2), wie vorzugsweise Düngerstreuer, Feldspritze oder Sämaschine, zur Ausbringung von landwirtschaftlichem Gut, ist so angepasst, dass mittels der elektronischen Einheit (6) Rechenoperationen zur Bestimmung von gutspezifischen Einstellparametern der landwirtschaftlichen Verteilmaschine (2) durchgeführt werden, wobei die hierfür notwendigen Rechenvorschriften auf der elektronischen Einheit gespeichert sind und das Ergebnis der Rechenoperation drahtlos oder drahtgebunden auslesbar und/oder auf einem Bildschirm der Einheit ablesbar ist,
**dadurch gekennzeichnet, dass**
Parameter, welche die landwirtschaftliche Maschine charakterisieren, zur Durchführung der Rechenoperationen drahtlos oder drahtgebunden an das Tag übertragen werden.

2. Elektronische Einheit nach Anspruch 1, **dadurch gekennzeichnet, dass** das Tag mit weiteren Informationen, vorzugsweise GPS-Koordinaten, versorgt wird und bearbeitete Flächen und Restmengen ermittelt sowie berechnete Einstellparameter zur weiteren Verwendung gespeichert werden.

3. Elektronische Einheit nach einem der vorstehenden Ansprüche, **dadurch gekennzeichnet, dass** Parameter zur Durchführung der Rechenoperationen in diese eingegeben werden.

## Claims

1. Electronic unit (6), in the form of a Bluetooth low-energy tag or RFID tag, having a data memory and a computing unit and a battery-powered energy supply for carrying in an agricultural distribution machine (2), such as preferably a fertilizer spreader, a field sprayer or a sowing machine, for applying agricultural material, is adapted such that
computing operations for determining material-specific setting parameters of the agricultural distribution machine (2) are carried out by means of the electronic unit (6), wherein the computing rules required for this are stored on the electronic unit and the result of the computing operation can be read out in a wireless or wired manner and/or can be read on a screen of the unit,
**characterized in that**
parameters characterizing the agricultural machine are transmitted to the tag in a wireless or wired manner for the purpose of carrying out the computing operations.

2. Electronic unit according to Claim 1, **characterized in that** the tag is supplied with further information, preferably GPS coordinates, and treated areas and remaining quantities are determined and calculated setting parameters are stored for further use.

3. Electronic unit according to one of the preceding claims, **characterized in that** parameters for carrying out the computing operations are input to the latter.

## Revendications

1. Unité électronique (6), réalisée sous la forme d'une étiquette Bluetooth à basse consommation ou d'une étiquette RFID, comprenant une mémoire de données et une unité de calcul et une alimentation en énergie alimentée par pile/batterie, destinée à être emportée avec une machine de distribution agricole (2), comme de préférence une épandeuse d'engrais, une rampe de pulvérisation de cultures ou un semoir, servant à épandre un produit agricole, est adaptée de telle sorte que
des opérations de calcul destinées à déterminer des paramètres de réglage de la machine de distribution agricole (2) spécifiques au produit sont effectuées au moyen de l'unité électronique (6), les prescriptions de calcul nécessaires à cet effet étant enregistrées sur l'unité électronique et le résultat de l'opération de calcul pouvant être lu sans fil ou de manière filaire et/ou pouvant être lu sur un écran de l'unité, **caractérisée en ce que**
des paramètres qui caractérisent la machine agricole sont transmis à l'étiquette sans fil ou de manière filaire en vue de réaliser l'opération de calcul.

2. Unité électronique selon la revendication 1, **caractérisée en ce que** l'étiquette est alimentée avec des informations supplémentaires, de préférence des coordonnées GPS, et les surfaces traitées ainsi que les quantités restantes sont déterminées et les paramètres de réglage calculés sont mémorisée en vue d'une utilisation future.

3. Unité électronique selon l'une des revendications précédentes, **caractérisée en ce que** des paramètres servant à réaliser les opérations de calcul sont saisis dans celle-ci.
